# EUROPEAN PATENT SPECIFICATION

(11) **EP 4 404 762 B1**
(45) Date of publication and mention of the grant of the patent: **13.08.2025**
(21) Application number: 22769901.4
(22) Date of filing: 25.08.2022
(51) Int. Cl.: A23J 3/22, A23J 3/26

(54) **HIGH MOISTURE TEXTURIZED VEGETABLE PROTEIN**
TEXTURIERTES PFLANZLICHES PROTEIN MIT HOHER FEUCHTIGKEIT
PROTÉINE VÉGÉTALE TEXTURÉE À TENEUR EN HUMIDITÉ

(30) Priority: 21.09.2021 EP 21198074
(43) Date of publication of application: 31.07.2024
(73) Proprietor: DSM IP Assets B.V., 6221 BE Maastricht (NL)
(72) Inventor: SEIN, Arjen, 6100 AA ECHT (NL); DE LANGE, Linda, 6100 AA ECHT (NL); JACOBS, Barbara, 6100 AA ECHT (NL)
(74) Representative: dsm-firmenich IP
(86) International application number: PCT/EP2022/073650
(87) International publication number: WO 2022/229474

(56) References cited:
- EP-A1- 3 578 053
- WO-A1-2019/143859
- JP-A- 2000 279 099
- BRUGGER CHRISTOPH ET AL: "Next Generation Texturized Vegetable Proteins", FOOD MARKETING & TECHNOLOGY @BULLET, 1 April 2017 (2017-04-01), pages 20 - 24, XP055898411, Retrieved from the Internet <URL:https://earthwormexpress.com/wp-content/uploads/2018/12/food_2_2017_proc.pdf> [retrieved on 20220307]
- VATANSEVER SERAP ET AL: "Low- and High-Moisture Extrusion of Pulse Proteins as Plant-Based Meat Ingredients: A Review", CEREAL FOODS WORLD, vol. 65, no. 4, 1 August 2020 (2020-08-01), XP055898409, ISSN: 2576-1056, DOI: 10.1094/CFW-65-4-0038

## Description

### Field of the invention

The present invention relates to a process for preparing a high-moisture extruded vegetable protein composition. Further, the present invention relates to a high-moisture extruded vegetable protein composition and the use thereof. Further, the present invention relates to meat alternative products.

### Background of the invention

World population growth in combination with increasingly limited resources has resulted in the need for alternative protein sources to meet global protein demand. The production of plant-based foods requires less land and water and is associated with lower greenhouse gas emissions compared with animal-based foods.

The interest in meat alternatives is rising, evidenced by a large increase in total sales for these products and an increase in variations of products. A high variety of products is seen that act as an alternative to meat: plant-protein-based material that has similar properties as meat in terms of texture, firmness, flavour, mouthfeel. The majority of these products are made from plant-based materials produced by extrusion. In general, two types of extrusion processes are used: dry and wet or high-moisture extrusion (HME) (wet and high-moisture are used interchangeably), sometimes also called high-moisture extrusion cooking.

By a dry extrusion process, texturized vegetable protein (TVP) is obtained, material that forms the base of the largest categories of meat alternatives such as burgers, sausages and so forth. In the dry extrusion process for TVPs, a mix of plant-based powders are fed into an extruder such as a co-rotating twin-screw extruder, together with approximately 10-30% water. This leads to TVP particles of various sizes and shapes depending on the cutting mode (such as the rotation speed of the knife, the distance between extruder head and rotating knife) and the dimensions of the holes, and many other processing parameters. These particles are often further dried to a moisture content below 8%. TVPs are applied in meat alternatives by rehydrating the TVP and combining other components like flavours, herbs and spices, onion pieces, oil, thickeners, binders, and so forth, to form a meat alternative product.

Whilst dry extrusion leads to relative homogeneous products, with a more isotropic character (mechanical behaviour is the same in all three dimensions), high-moisture extrusion can lead to products with a highly fibrous nature (also called fibril formation), such as found in many meat products (not based on minced meat or ground meat), like chicken-style or beef-style material. In the HME process, a higher water level is used, such as from 40 to 80% on total. In the process, commonly a blend of solids is fed and mixed with water in the extruder. The blend of solids can also be partly or fully hydrated before being fed into the extruder. In the extruder the material is (further) hydrated and kneaded into a more homogeneous mass. Due to torque and optional external heating, high temperatures, such as between 130°C and 170°C can be obtained in the extruder barrel, resulting in a melt (or 'material with melt-like properties'). Likely the various components in the mix have different states of hydration, and on molecular and mesoscopic scale phase separation can occur between various components. At the end of the extruder the melt is fed into a cooling die, where controlled cooling down under flow leads to fibrous nature of the material. The dimensions of the cooling die depend partly on the scale that is used: on smaller scale usually dies with rectangular cross sections are used. On larger, industrial scale, often cylindrical cooling dies are used, such as described by WO2015020873A1. In some cases, extra elongational shear steps are introduced before the cooling die to further stimulate fiber formation. By varying the settings of the cooling die, various textures can be obtained. Thus, a material arises with a fiber-like character, and can be described as 'anisotropic': material properties and microstructure are not the same in all three dimensions.

The cooling dies used on small scale can have various lengths and various cross section shapes and dimensions. Often a rectangular cross section is used with various width over height. The thicker (the smaller the width over height) the larger the chance for occurrence of so-called 'core flow', where the outer layer of the material coming out of the die is firm and elastic and the core is more viscous and detached from the outer layer. This is a sign of poor processing, due to wrong process parameters, but also a sign of an intolerant composition. Thus, there is a need in the art for HME processes with improved processing, thereby reducing the occurrence of core flow, and obtaining material with the same fibrous character throughout the whole product.

The technique of high-moisture extrusion is very well suited to produce anisotropic, fibrous material, which is clearly discernable during mastication (while eating the product) and is generally linked to meat-like textures that are often also fibrous and anisotropic. Such characteristics are well perceived by consumers. Products made with this material can be turned into for instance chicken-style, beef-style or fish-style pieces for stir fry dishes or used in sauces and stews. To this end the flow of material from the extruder is ripped or cut into (irregular) pieces. These pieces can be marinated before being packed, using a marinade consisting of for instance oil and water and herbs, spices, and flavours. Alternatively, the pieces can be added to a ready-made sauce, and packed. When used in a sauce, the products should retain their firmness, chewiness and fibrousness during 'cook up' in (often low-pH) sauces. Alternatively, the material can be the base for product like nuggets, for which pieces obtain a crispy breaded coating or breaded schnitzel-type of products. High-moisture extruded material can also be milled or minced into smaller crumbles and used as bulk ingredient in shaped meat alternative products such as burger-style patties, sausages, meat-ball-style and the like. Flat strips of high-moisture extruded material can also be dried back to obtain 'beef jerky-style' strips of tough material.

For logistic reasons the material stream coming from the extruder and after cutting / ripping to pieces, can be frozen directly, or marinated and frozen, before being packed - usually under protective environment - and stored frozen until distribution in the retail chain. Thus freeze-thaw stability is an important factor. The material should not be harmed by the freezing and thawing process, in the sense of losing firmness and decrease of fibrousness. Hence, there is a need in the art for HME's that survive freezing and thawing without loss of consistency or fibrousness. More preferably the firmness and fibrousness become more pronounced, higher after the freeze-thaw process.

The majority of wet extrudates commonly are made from soy (flours or concentrates), wheat or gluten, or quite often combinations of the two. Insoluble fiber can be added as a filler and to modify the texture. For example, WO16151064 discloses a mix of soy protein concentrate and wheat gluten protein concentrate; WO20208104 discloses a mix of soy protein concentrate and wheat gluten protein concentrate, and EP2706867B1 discloses a soy concentrate.

WO2016/167749 discloses the production of a heat stable extruded protein product, comprising a proteinaceous composition having a (soy) protein content of about 65% to 90% by dry weight, a moisture content of about 45 to about 56%, and an oil content of up to about 15% by dry weight.

Many producers today try to avoid soy and wheat/gluten because of potential allergenicity risks. Therefore, an increase in extrudates based on legumes like pea or fava bean or lupin or chickpea is seen. However, apparently the market is not fully satisfied with these products. The processes do not run smoothly, material properties are not satisfying, with too soft and inhomogeneous products, often with relatively low levels of water to obtain at least some sort of firmness, chewiness and fibrousness, which lead to low juiciness perception and rapid loss of firmness during marination or cook up.

WO2019/143859 relates to plant based jerky formulations having an anisotropically fibrous meat-like texture, free of soy proteins. Disclosed is a method comprising high moisture extrusion of a composition comprising at least two plant-based protein sources, each of them being at least 30% of the total protein. In the experimental part, moisture levels up to 57% are reported and amounts of protein above 70% on the dry matter of the mix. After extrusion the extrudate is dried in order to provide the jerky type product.

Similarly, WO2021/046375 relates to a plant-based jerky type of snack, produced by high-moisture extrusion of one or more protein sources, a plurality of dry ingredients, and a medium such as water. Thereafter, the extrudate may be dried or dehydrated up to less than 25% water, to form the plant protein snack with meat-like texture product. The protein source is nut, grain and/or legume protein, such as pea or soy.

There remains a need in the art for high-moisture vegetable-protein-based extruded material combining a highly fibrous character with a high juiciness and tenderness. One way of increasing juiciness and tenderness is to increase the moisture content in the texturized vegetable protein. However, increasing the moisture content during extrusion may lead to a too soft and mushy type product, without chewiness and fibrousness. This is undesired. Moreover, this leads to process instability and product inhomogeneity - such as can be seen in 'core flow'.

It has now been found that single legume-based high-moisture texturized vegetable proteins can be improved by co-processing with rapeseed protein. Blending the legume-based protein with rapeseed protein leads to a highly fibrous character of material with increased chewiness, allows for a high moisture content, increasing the tenderness, while maintaining firmness, chewiness and fibrousness. Moreover, it leads to an improved processing by providing a more stable process with a homogenous fibrousness throughout the product, and reduced core flow.

### Detailed description of the invention

In a first aspect, the present invention relates to a process for preparing a high-moisture extruded vegetable protein composition comprising:
(a) mixing rapeseed protein, a single legume-derived protein, and from 40-80 wt. % water (of the mixture) in an extruder, wherein the ratio of rapeseed protein to legume-derived protein is from 5:95 to 40:60 and (preferably) wherein the amount of protein is within the range of 50 to 75 (wt) %, preferably 50 to 70 (wt) % on dry weight of the mixture;
(b) heating the mixture obtained in step (a) in the extruder to a maximum temperature of 100-180°C; and / or
(c) extruding the mixture obtained in step (b) through a cooling die, to provide the high-moisture extruded vegetable protein composition having a moisture content of 40-80 wt. %.

Surprisingly, the present inventors found that combining a legume-derived protein with rapeseed protein provides a high-moisture extruded vegetable protein composition that allows higher amounts of water, while maintaining or even increasing fibrousness, chewiness and firmness.

In a preferred embodiment the present rapeseed protein comprises cruciferins and napins.

In a preferred embodiment the present (weight) ratio of cruciferins to napins in the present rapeseed protein is within the range of 1:99 to 99:1, 5:95 to 95:5, or 10:90 to 80:20 (w/w). Preferably in the range of 20:80 to 80:20, such as 30:70 to 80:20.

In a preferred embodiment the present (weight) ratio of cruciferins to napins in the protein isolate is within the range of 40:60 to 60:40 (w/w) such as 45:55 to 59:41.

In another preferred embodiment, the present (weight) ratio of cruciferins to napins in the protein isolate is within the range of 60:40 to 80:20 (w/w), such as 60:40 to 75:25 (w/w) or such as 65:35 to 75:25. An example of such a rapeseed protein is Puratein^{©}.

Preferably the amount of cruciferins and napins is determined by Blue Native Page, HP-SEC or by sedimentation velocity (SV-AUC).

Preferably, the amounts of cruciferins and napins calculated based on the total amount of rapeseed protein. Or alternatively, the amounts of cruciferins and napins are calcuated based on the sum of cruciferins and napins present in the rapeseed protein. Preferably, the amounts of cruciderins and napins are determined by size exclusion chromatography (SEC). Preferably, the amounts of cruciderins and napins are determined by size exclusion chromatography (SEC) using the following test:
samples of protein isolate are dissolved in a 500 mM NaCl saline solution and analyzed by High Performance SEC using the same solution as the mobile phase, followed by detection using measuring UV absorbance at 280 nm, wherein the relative contribution of cruciferin and napin (wt. %) was calculated as the ratio of the peak area of each protein with respect to the sum of both peak areas.

Rapeseed protein may be in the form of an isolate or a concentrate. Rapeseed protein isolate may be prepared from cold-pressed rapeseed oil seed meal as described in WO 2018/007492 resulting in a product with a protein content of from 50-98% (w/w), or from 70-95% (w/w) or of 90±5% (w/w). The rapeseed protein isolate may comprise of from 40-65% (w/w) cruciferins and of from 25-60% (w/w) napins as verified by Blue Native PAGE, for example as described in WO 2018/007492. Alternatively, the rapeseed protein isolate may comprise at least 50, 60, 70, 80% (w/w), preferably at least 85% (w/w), preferably at least 90% (w/w), more preferably at least 95% (w/w) cruciferins as verified by Blue Native PAGE, for example as described in WO 2018/007492. Alternatively, the rapeseed protein isolate may comprise at least 50, 60, 70, 80% (w/w), preferably at least 85% (w/w), preferably at least 90% (w/w), more preferably at least 95% (w/w) napins as verified by Blue Native PAGE, for example as described in WO 2018/007492. More preferably the rapeseed protein isolate comprises 10-40% (w/w) napins and 40-60% (w/w) cruciferins, preferably as verified by Blue Native PAGE, for example as described in WO 2018/007492. More preferably the rapeseed protein isolate comprises 25-35% (w/w) napins and 40-55% (w/w) cruciferins, preferably as verified by Blue Native PAGE, for example as described in WO 2018/007492.

Preferably, the present rapeseed protein comprises 40 to 65 wt. % 12S and 35 to 60 wt. % 2S. Preferably, the present rapeseed protein comprises 40 to 55 wt. % 12S and 45 to 60 wt. % 2S.

In a preferred embodiment, the present rapeseed protein comprises 60 to 80 wt. % 12S and 20 to 40 wt. % 2S. Preferably, the present rapeseed protein comprises 65 to 75 wt. % 12S and 25 to 35 wt. % 2S.

In a preferred embodiment, the present rapeseed protein comprises 0 to 20 wt. % 12S and 80 to 100 wt. % 2S. Preferably, the present rapeseed protein comprises 0 to 10 wt. % 12S and 90 to 100 wt. % 2S. Preferably, the present rapeseed protein comprises 1 to 5 wt. % 12S and 95 to 100 wt. % 2S. Preferably, the present rapeseed protein comprises around 15 wt. % 12S and around 85 wt. % 2S. An example of such a rapeseed protein is Puratein^{®} HS.

Preferably, the amounts of 12S and 2S is determined by sedimentation velocity analytical ultracentrifugation (SV-AUC) analysis. Preferably, the amounts of 12S and 2S is determined by sedimentation velocity analytical ultracentrifugation (SV-AUC) analysis using the following test: samples of protein isolate are dissolved in a 3.0% (or 500 mM) NaCl saline solution and amounts determined using interference optics.

In a preferred embodiment, the present rapeseed protein comprises 0 to 20 wt. % cruciferins and 80 to 100 wt. % napins. Preferably, the present rapeseed protein comprises 0 to 10 wt. % cruciferins and 90 to 100 wt. % napins. Preferably, the present rapeseed protein comprises 1 to 5 wt. % cruciferins and 95 to 100 wt. % napins. Preferably, the present rapeseed protein comprises around 15 wt. % cruciferins and around 85 wt. % napins. An example of such a rapeseed protein is Puratein^{®} HS.

In a preferred embodiment, the present rapeseed protein (does not) comprises 70 to 95 wt. % cruciferins and 5 to 30 wt. % napins. Preferably, the present rapeseed protein (does not) comprises 80 to 90 wt. % cruciferins and 10 to 20 wt. % napins, such as around 90% cruciferins and 10% napins.

In an embodiment the rapeseed protein isolate is low in anti-nutritional factors and contains less than 1.5% (w/w) phytate, preferably less than 0.5% (w/w) phytate, and is low in glucosinolates (<5 µmol/g) and low in phenolics (<10 mg/g).

In one embodiment, the present rapeseed protein has a solubility (in water) of at least 88%, preferably at least 90%, more preferably at least 94% and most preferably at least 96% when measured over a pH range from 3 to 10 at a temperature of 23±2°C. This is also known as the soluble solids index (SSI).

The term 'single legume-derived protein' as used in the present context means a protein derived from the same type of legume. Hence it is not a blend of proteins derived from different legumes. Legume-derived proteins may be for instance from lupin, pea (yellow pea, green pea), bean (such as soybean, fava (faba) bean, kidney bean, green bean, haricot bean, pinto bean, mung bean, adzuki bean), chickpea, lupin, lentil, and peanut, and the like. Fava bean and faba bean can be used interchangeably. Advantageously, the legume-derived protein is non-allergenic. In an embodiment the protein may be in the form of a (protein enriched) flour, a concentrated flour (obtained for example by wind sifting), a concentrate (>60% protein) or an isolate (>80% protein), or a press cake or an extracted cake. Preferably, the present legume-derived protein is chosen from the group consisting of pea protein, fava bean protein, lupin protein, and soy protein.

In a preferred embodiment, the amount of rapeseed protein and single legume-derived protein are at least 80 wt. % of the protein in the mixture, preferably at least 83, 85, 87, 90, 92, 95, 97, 99 wt. % of the protein of the mixture. Or wherein the amount of rapeseed protein and single legume-derived protein is 100 wt. % of the protein in the mixture.

In a preferred embodiment, the present single legume-derived protein is pea protein or fava bean protein. Preferably, the present mix in step (a) does not, or hardly not, comprise other plant proteins than the single legume derived protein and the rapeseed protein. Preferably, the present mixture in step (a) comprises pea and rapeseed protein, or faba and rapeseed protein, without any other plant protein included. Preferably the rapeseed protein and the pea or faba bean protein form together at least 90% of the protein in the mixture (a), more preferably at least 95 or 99% of the protein in the mixture.

In present step (a), the amount of water of 40-80 wt. % is on (total) weight of the mixture (or of the processed material in the extruder). Preferably, the amount of water is 45-75, 50-70, 55-65 or 57-62 wt. %. Preferably the amount of water is 50, 51, 52, 53, 54, 55, 56, 57, 58, 59, 60, 61, 62, 63, 64, 65, 66, 67, 68, 69 or 70 wt. %.

In a preferred embodiment, the amount of water in step (a) is from 40-80 more preferably 55-75, more preferably 59-70 wt % of the mixture.

Preferably, the (weight) ratio of rapeseed protein to legume-derived protein is from 5:95 to 40:60; from 6:94 to 35:65, from 10:90 to 30:70, from 13:87 to 27:73 or from 15:85 to 25:75.

The temperature in present step (b) the maximum temperature preferably within the range of 105-175°C; 110-165°C, 120-160°C or 125-140°C. Preferably the maximum temperature in present step (b) is preferably within the range of 105-175°C; 110-165°C, 120-160°C or 125-140°C.

Preferably, in present step (b) the temperature is preferably within the range of 30-175°C; 40-165°C, 50-160°C or 60-140°C.

Preferably, in present step (c), the cooling die has a temperature within the range of 20-90°C, 30-85°C, 40-80°C, 50-75°C, or 55-90°C.

In a preferred embodiment, present step (a) further comprises mixing a plant-based fiber, preferably in an amount of 5-40 wt. % on dry weight of the mixture. Preferably in an amount of 10-35 wt. % on dry weight of the mixture, from 12-24 wt. % on dry weight of the mixture, from 15-30 wt. % on dry weight of the mixture. The advantage of using a plant-based fiber is that it is a filler and might contribute to the texture or firmness of the high-moisture extruded vegetable protein composition. Examples of plant-based fiber are pea fiber, fava bean fiber, lupin fiber, oil seed fiber (such as sunflower seed fiber or cotton seed fiber, rapeseed fiber), fruit fiber (such as apple fiber), cereal fiber (such as oat fiber, maize fiber, rice fiber), bamboo fiber, potato fiber, inulin, or combinations thereof. Fibers are commonly present in plant-based foods and cannot (completely) be broken down by the human digestive enzymes, are either water-soluble or water-insoluble fibers. They may consist of (mixtures of) cellulose, hemicellulose, pectins and other non-starch polysaccharides or plant cell-wall biopolymers. Fiber fractions are materials that also can comprise protein, starch, lignin and/or ash.

In a further embodiment, present step (a) further comprises mixing in next to the rapeseed protein, a single legume-derived protein, a different protein source derived from seed oils in the form of a concentrate, an oil-depleted press cake or a flour, such as sunflower seed, rapeseed or canola, linseed, and so forth, to produce good, firm and fibrous wet extrudates with at least 50% water. Also in the absence of the single legume-derived protein, such good products can be made with only seed oil concentrate, press cake or flour in combination with rapeseed protein isolate.

In a preferred embodiment, the amount of protein in step (a) is within the range of 50 to 70%, or 52 to 68, 55 to 65, 54 to 64 wt. % on dry weight of the mixture. An amount of protein between 50 and 70% is advantageous in that the amount of protein is limited, thus providing a cost advantageous process, still providing the desired chewiness and fibrousness.

In a preferred embodiment, present step (a) further comprises mixing a calcium-containing mineral, preferably, calcium carbonate, calcium chloride or calcium phosphate, preferably in an amount of 1 to 5 wt. % on dry weight of the mixture. Preferably present step (a) further comprises mixing calcium carbonate or calcium chloride. The amount of calcium containing mineral is preferably 0.5 to 3.5 wt. % on dry weight of the mixture.

The calcium carbonate is preferably in powder form (in the powder mix that is added in (the beginning of) the extruder). More preferably the calcium carbonate has a particle size comprising 35% of the particles have a size of < 2µm, preferably 45% of the particles have a size of < 2µm. Preferably the particle size is measured using light scattering on a particle size analyser. Preferably the amount of calcium carbonate is from 0.1 to 5% (w/w), preferably from 0.2 to 3% (w/w) more preferably from 1 to 2.5% (w/w) of the mixture. Preferably the calcium carbonate is ground natural calcium carbonate or precipitated calcium carbonate.

Preferably, in present step (a), further comprising mixing NaCl, preferably within the range of 0.1 to 5 wt. %, such as from 1 to 3 wt. % on dry weight of the mixture.

Preferably, the present mixture in step (a) comprises from 25 to 35 wt % plant-based fiber, from 10 to 20 wt. % rapeseed protein, from 40 to 50 wt. % legume derived protein, and/or from 1 to 3 wt. % calcium carbonate or calcium chloride, on dry weight of the mixture. Preferably, the amount of water is from 50 to 65% on weight of the mixture.

In a preferred embodiment, flavours can be added to change the flavour of the product, such as savoury flavours, like yeast extracts or meat-, chicken-, or fish-style flavours, or specific flavours. Such flavours can be added as part of the powder premix before feeding into the extruder or dispersed in a water phase or oil phase and added as a separate liquid stream anywhere in the extruder, beginning, middle or end. Or combinations of flavours at various addition points.

In a further embodiment, nutritional ingredients such as vitamins or minerals or colourants can be added. These can be added into the powder premix or dispersed in a liquid and added separately directly into the extruder at any position downstream from the premix powder addition.

Given the advantageous high-moisture extruded vegetable protein composition provided by the present method, the present invention relates to a high-moisture extruded vegetable protein composition comprising rapeseed protein, a single legume-derived protein, plant-based fiber and from 40-80 wt. % water, wherein the ratio of rapeseed protein to legume-derived protein is from 5:95 to 40:60 (preferably) comprising an amount of protein within the range of 50 to 75, preferably 50-70, wt. % on dry weight of the composition.

Preferably, the present high-moisture extruded vegetable protein composition is obtainable by the present method.

Preferably, the present high-moisture extruded vegetable protein composition comprises an amount of water from 45-75, 50-70, 55-65 or from 57-62 wt. % (of the composition). Preferably the amount of water is 50, 51, 52, 53, 54, 55, 56, 57, 58, 59, 60, 61, 62, 63, 64, 65, 66, 67, 68, 69 or 70 wt. % (of the composition). It is advantageous to include higher amounts of water compared to an equal composition without rapeseed protein, as this provides a good balance of chewiness and firmness.

Alternatively, the amount of water is from 40-80 more preferably 55-75, more preferably 59-70 wt %.

Preferably, the (weight) ratio of rapeseed protein to legume-derived protein is from 5:95 to 40:60; 6:94 to 35:65, 10:90 to 30:70, 13:87 to 27:73, 15:85 to 25:75.

In a preferred embodiment, the present high-moisture extruded vegetable protein composition further comprises a plant-based fiber, preferably in an amount of 5-40 wt. % on dry weight of the composition. Preferably in an amount of 10-35 wt. % on dry weight of the composition, from 12-24 wt. % on dry weight of the composition, from 15-30 wt. % on dry weight of the composition.

In a preferred embodiment, the amount of rapeseed protein and single legume-derived protein are at least 80 wt. % of the protein in the composition, preferably at least 83, 85, 87, 90, 92, 95, 97, 99 wt. % of the protein in the composition. Or wherein the amount of rapeseed protein and single legume-derived protein is 100 wt. % of the protein in the composition.

In a preferred embodiment, the present high-moisture extruded vegetable protein composition comprises an amount of protein within the range of 50 to 70 wt % on dry weight of the composition. Preferably an amount protein of 52 to 68, 55 to 65, 54 to 64 wt. % on dry weight of the composition. An amount of protein between 50 and 70% is advantageous in that the amount of protein is limited, thus providing a cost advantageous process, still providing the desired chewiness and fibrousness.

The amount of protein in a HME composition could be determined by a Dumas analysis to determine the nitrogen level, and by conversion factor (commonly 6.25) to obtain the protein level of the product. A dry matter analysis (by e.g. dry matter balance) one can determine the protein content on dry matter.

Preferably, the present high-moisture extruded vegetable protein composition comprises an amount of protein within the range of 25 to 35 wt % on total weight of the composition. Preferably an amount protein of 26 to 33, 27 to 32, 27 to 31 wt. % on total weight of the composition.

In a preferred embodiment, the present high-moisture extruded vegetable protein composition comprises a calcium-containing mineral, preferably, calcium carbonate, calcium chloride or calcium phosphate, preferably in an amount of 1 to 5 wt. % on dry weight of the composition. The amount of calcium containing mineral is preferably 1.5 to 3.5 wt. % on dry weight of the composition. Preferably the calcium containing material is calcium carbonate or calcium chloride or calcium phosphate.

In a preferred embodiment, the single legume-derived protein is pea protein or fava bean protein. Preferably, the present composition does not, or hardly not, comprise other plant proteins than the single legume derived protein and the rapeseed protein. Preferably, the present composition comprises pea and rapeseed protein, or faba bean and rapeseed protein, without any other plant protein included. Preferably the rapeseed protein and the pea or faba bean protein form together at least 90% of the protein in the composition, more preferably at least 95 or 99% of the protein in the composition.

In another preferred embodiment the present high-moisture extruded vegetable protein composition comprises less than 20 ppm gluten, less than 10 ppm gliadin and/or does not comprise soy allergens. Gluten and soy are known allergens, and thus it is advantageous that the present composition is free of these allergens.

In a preferred embodiment, the present high-moisture extruded vegetable protein composition comprises a firmness that is at least 10%, at least 15%, at least 20% or at least 25% firmer than a comparable high-moisture extruded vegetable protein composition wherein the amount of rapeseed protein is replaced by amount of the single legume derived protein. Firmness can be measured by texture analysis, for instance by a Texture Profile Analysis (TPA) protocol, known in the art.

In a preferred embodiment, the present high-moisture extruded vegetable protein composition comprises an amount of NaCl within the range of 0.1 to 5 wt. %, such as from 1 to 3 wt. % dry weight of the composition.

Preferably, the present high-moisture extruded vegetable protein composition comprises from 25 to 35 wt % plant-based fiber, from 10 to 20 wt. % rapeseed protein, from 40 to 50 wt. % legume derived protein, and/or from 1 to 3 wt. % calcium carbonate or calcium chloride, on dry weight of the composition. Preferably, the amount of water is from 50 to 65% on weight of the composition.

The present invention further relates to the use of the present high-moisture extruded vegetable protein composition in the preparation of a meat alternative. Preferably, the meat alternative is chosen from the group consisting of a chicken-style pieces, beef-style pieces, fish-style pieces, smokey pieces, shawarma-style pieces, bacon-style pieces, nuggets, crumbles, balls, jerky, fish-finger-like products, schnitzel-type products, products with a crispy coating, croquettes, HME-based pieces, HME based crumbles, chicken-style, beef-style or fish-style burgers or patties, sausages, 'meat' balls, preferably chicken-style, beef-style or fish-style jerkies, deli, like sliced ham-style alternative products, salads such as vegetable-based tuna-style and vegetable-based chicken-style salads, canned-fish alternatives, such as canned tuna alternative. Products for human consumption as well as for pet food or animal feed.

The present invention further relates to meat alternative products comprising the present high-moisture extruded vegetable protein composition, preferably which meat alternative product is chosen from the group consisting of a chicken-style, beef-style or fish-style pieces, nuggets, crumbles, balls or jerky. Preferably chicken-style, beef-style or fish-style pieces, preferably chicken-style, beef-style or fish-style nuggets, preferably chicken-style, beef-style or fish-style crumbles, preferably chicken-style, beef-style or fish-style balls, preferably chicken-style, beef-style or fish-style jerkies. Preferably, the meat alternative is chosen from the group consisting of a chicken-style pieces, beef-style pieces, fish-style pieces, smokey pieces, shawarma-style pieces, bacon-style pieces, nuggets, crumbles, balls, jerky, fish-finger-like products, schnitzel-type products, products with a crispy coating, croquettes, HME-based pieces, HME based crumbles, chicken-style, beef-style or fish-style burgers or patties, sausages, 'meat' balls, preferably chicken-style, beef-style or fish-style jerkies, deli, like sliced ham-style alternative products, salads such as vegetable-based tuna-style and vegetable-based chicken-style salad or canned-fish alternatives, such as canned tuna alternative. Products for human consumption as well as for pet food or animal feed.

### Description of figures

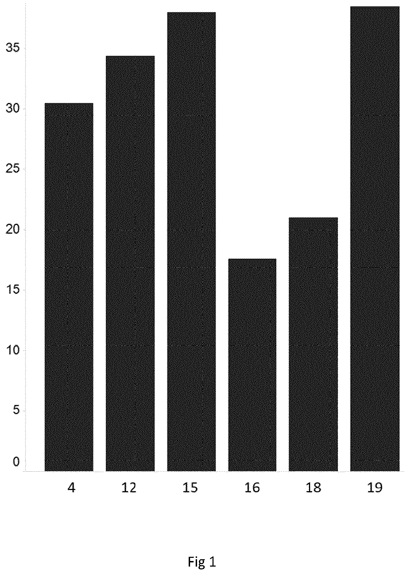

Figure 1 shows the firmness (force in Newton, Y axis) of a selection of samples (indicated by the numbers) described in Example 1, obtained by using a home-made rectangular plate-shaped probe for compression, showing that the increase in RPI content led to firmer product, for products processed with 50% water: comparing sample 4 (no RPI) to sample 12 (10% RPI), and -with CaCl₂ added- sample 15 (10% RPI) to sample 16 (15% RPI). The effect of CaCl₂ can be seen by comparing sample 12 and 15. The effect of RPI concentration was also seen for products processed at 55% water, compare sample 16 (10%RPI, CaCl2) to 18 (15% RPI, CaCl₂)
Figure 2 shows high-moisture extruded protein compositions, described in example 2, after freezing and thawing, torn open to illustrate the fibrousness. Left: soy-based product (sample 1), middle: pea-only-based product (sample 3), right: product with pea and 20% RPI (sample 4); top: material as such, bottom: the same products after a short manual kneading.
Figure 3 shows firmness values (force in Newton) of various products described in example 2, obtained by using a sharp knife for compression.
Figure 4 shows firmness values (force in g) of samples described in example 6. Figure 4A shows all values measured and figure 4B shows the same but split out to the percentage of water used during processing, left 50%, middle 55% and right 58-62%.
Figure 5 shows resilience values (in %) of samples described in example 6. Figure 5A shows all values measured. Figure 5B shows the same but split out to the percentage of water used during processing, left 50%, middle 55% and right 58-62%.

### EXAMPLES

### Materials and methods

- Rapeseed protein isolate (RPI) was prepared from cold-pressed rapeseed oil seed meal as described in WO 2018/007492; the protein content was 90% (w/w). The resultant RPI comprised in the range of from 40 to 65% (w/w) cruciferins and 35 to 60% (w/w) napins, contained less than 0.26% (w/w) phytate and had a solubility of at least 88% when measured over a pH range from 3 to 10 at a temperature of 23±2°C.
- Pea Protein Isolate (PPI), Pisane C9 [Cosucra, Warcoing Belgium], composition based on D.M. 95 ± 2%, comprising around 80% protein (used in examples 1 and 2).
- Pea Fiber (PF) Swelite [Cosucra, Warcoing Belgium],
- Calcium chloride dihydrate [Applichem or Merck]
- Calcium carbonate (CaCO₃) [Applichem or Merck]
- Soy protein concentrate: Alpha 8 IP [Dupont Nutrition and Biosciences]
- Fava bean enriched flour ABM HT60-HT [Roland Beans, Germany], comprising around 60% protein (used in example 3)
- Pea protein concentrate E1155X [Vestkorn, Tau, Norway], comprising around 55% protein
- Nutralys F85M [Roquette Frères, Lestrem, France]
- Rapeseed protein isolate, Puratein^{®} HS, [Merit Foods, Winnipeg Canada]

### Example 1

### HME products based on pea protein isolate and rapeseed protein isolate

Extrusion tests were carried out by using a twin-screw extruder ZSK 27 MV from Coperion GmbH. The extrusion barrel is divided in 10 sections each with their own temperature control. A cooling die FKD-750 from DIL e.V. Quackenbrück, Germany, was used, which had a cross section of 15x50 mm and a length of about 800 mm. Protein powder was fed with a gravimetric solid feeder into the first barrel (Coperion K-Tron). Tap water was fed with a gravimetric peristaltic pump (Watson Marlow) into the second barrel. During the extrusion process mainly powder/water ratio was changed. The screw speed was set to 700 rpm in most of the trials, and a throughput of approx. 16 kg/h was used, and a temperature profile of around 130°C at barrels 6 and 7, and 100°C in the last barrel, #10. Bars of material coming out of the cooling die were collected, packed in plastic bags and immediately frozen until further analysis.

The compositions of the samples that were made, are described in the table 1, and a description of the material coming from the line are given below the table. Physical and sensory evaluation was done after thawing the material.

**Table 1**

| Composition | Sample # | Water [%] | PPI (%) | PF (%) | NaCl (%) | RPI (%) | CaCl₂ (%) | Ratio rapeseed: pea protein | Processing details |
|---|---|---|---|---|---|---|---|---|---|
| A Reference Without salt | 1 | 50 | 78 | 22 | 0 | 0 | 0 | - | Cooling die: 75°C, Screw speed: 500 rpm |
| | 2 | 60 | | | | | | | No changes |
| | 3 | 60 | | | | | | | Screw speed 700 rpm |
| B Ref plus salt | 4 | 50 | 78 | 20 | 2 | 0 | 0 | - | No changes |
| | 5 | 60 | | | | | | | |
| C | 6 | 60 | 73 | 20 | 2 | 5 | 0 | 7:93 | Cooling die decreased to 65°C |
| | 7 | 65 | | | | | | | |
| | 8 | 50 | | | | | | | |
| D | 9 | 60 | 68 | 25 | 2 | 5 | 0 | 8:92 | No changes |
| | 10 | 50 | | | | | | | No changes |
| E | 11 | 60 | 63 | 25 | 2 | 10 | 0 | 15:85 | No changes |
| | 12 | 50 | | | | | | | No changes |
| | 13 | 50 | | | | | | | Cooling die temp from 65°C to 75°C |
| F | 14 | 60 | 63 | 23 | 2 | 10 | 2 | 15:85 | Cooling die 65°C |
| | 15 | 50 | | | | | | | |
| | 16 | 55 | | | | | | | |
| G | 17 | 60 | 53 | 30 | 0 | 15 | 2 | 24:76 | No changes |
| | 18 | 55 | | | | | | | |
| | 19 | 50 | | | | | | | |

Composition A reference no salt, only pea protein isolate and fibers. At 50% water, a representative product was obtained after long stabilization time. In sample 2, the water level was changed to 60%, the screw speed increased, led sometimes to a somewhat acceptable reference product. However, the process was unstable and often 'core flow' was seen. (Core flow occurs in the cooling die when the outer layer cools down and solidifies too fast, whereas the core is still more liquid. The outside layer gets detached from the core, and outer layer leaves the cooling die at a lower speed than the inner, more fluid core. Core flow is a clear defect and indication of poor processing or processing. The degree of fiber formation at the outside is low, and often in the core too.)

Composition B, reference with 2% salt - 78% pea protein isolate, 20% pea fiber: Sample 4, with 50% water, ran smoothly and gave a stable but soft product, fibrousness (fiber formation) was below standard. With 60% water - sample 5 - the extruded product became inhomogeneous and substantial core flow occurred.

In composition C, 5% RPI was added, replacing 5% pea protein isolate. The temperature of the cooling die could be reduced from 75°C to 65°C, because the mass showed gas bubbles in the core. This was considered a positive development as lower temperatures may lead to better solidification of the mass and increasing/arresting the fibrous character, and the chance on gas bubble formation is reduced, but the chances on core flow are higher. Die temperatures for products made with soy protein are also lower (20-30°C). Sample 6 was made with 60% water. Upon tearing the sample open, a good fiber structure was visible. Sample 7 contained even more water: 65% which was too much water, the product was too soft. Reducing the water level for sample 8 to 50% resulted in a good fibrated product. This shows that already 5% RPI improves the product substantially relatively to an all-pea product.

Composition D, 5% RPI and 25% pea fiber, which is 5% more fibers replacing pea protein isolate. Sample 9 was processed at 60% water, led to inhomogeneous product and core flow occurred. In sample 10 the water level was reduced to 50%, resulting in more acceptable product.

Composition E, 10% RPI (= 5% up) and 25% pea fiber. The sample 11, made with 60% water gave some core flow. The composition with 50% water, sample 12, did not gave core flow, the fibrous texture was clear but a bit more disordered than other materials. Therefore, it was decided to increase the temperature of the cooling die from 65°C back to 75°C [common for pea], resulting in sample 13.

Composition F consisted of 63% pea protein isolate, 23% pea fiber, 10% RPI and 2% calcium chloride and 2% NaCl, which was comparable with composition E, only difference was addition of 2% calcium chloride (calculated without the hydrate water) and reducing the fiber level by 2%. The cooling die was set at 65°C. Sample 14, with a water content of 60%, ran smoothly, and the product showed good fibrousness. This is a first indication that a 60% water product could be processed well. Reducing the water level to 50% - sample 15 - the product became dry and too hard. The final sample of this composition, sample 16, was with 55% water, and that was considered the best one of this series, with good fibrousness and good bite. Compared to composition E, these products with 2% calcium chloride were qualitatively better. This showed that with RPI and a calcium salt, good products can be made with a relatively low overall protein content.

Composition G contained 53% pea protein isolate, 30% pea fiber, 15% RPI and 2% calcium chloride (this composition nears a pea protein concentrate type of material). Sample 17 with a water content of 60% ran stable, and good fiber formation was obtained, even at this high level of water. Sample 18, with 55% water, and sample 19 with 50% water, extruded homogeneously, and were well fibrated too. Compared to Composition E, without calcium, this composition with such a high fiber level, RPI and calcium gave much better products and a more stable process.

A smaller set of samples were subjected to firmness measurements, using an SMS TX1 Texture Analyser (Stable Microsystems), with a home-made plate-shaped probe of 10x1 mm cross section and 30 mm long. The plate-shaped probe was pushed into the middle of the strip of extruded material after thawing, parallel to the flow direction. Firmness in compression was determined using the following procedure: Pre-Test speed 2 mm/s; Test speed 1 mm/s; Post-test speed 10 mm/s; Target mode: Strain 90%; Trigger type: Auto force; Trigger force 5g. Products were tested in duplicate or triplicate. The results are given in table 2, and graphically represented in figure 1.

**Table 2**

| Sample # | Force [N] |
|---|---|
| 4 | 30.4 |
| 12 | 34.4 |
| 15 | 38.0 |
| 16 | 17.6 |
| 18 | 21.0 |
| 19 | 38.5 |

In a set of products processed with 50% water, the increase in RPI content led to firmer product: going from sample 4 (no RPI) to sample 12 (10% RPI), and with CaCl2 added from sample 15 (10% RPI) to sample 19 (15% RPI). The effect of CaCl2 is seen by comparing sample 12 and 15. The effect of RPI concentration was also seen for products processed at 55% water, compare sample 16 (10%RPI, CaCl2) to 21 (15% RPI, CaCl2).

Products were tasted by a trained sensory panel. Products processed at 50% were found significantly firmer and tougher than processed at 55% water. None of the other attributes were significantly different, however, the trends showed that replacement of pea protein by RPI at a water level of 50% led to a slightly firmer product, experienced as firmer, tougher, and more fibrous, while juiciness was about the same. Addition of calcium further enlarged this effect. Further replacement of pea protein isolate by more pea fiber and 15% RPI still was found to give an acceptable product, firm and fibrous.

The materials produced as described above showed that increasing the RPI content and reducing the pea protein isolate content led to firmer products and better fibrousness, and processing was more stable, all compared to a composition with only pea protein isolate and pea fiber. Moreover, incorporating RPI allowed for more water incorporation, whilst maintaining firmness and fibrousness. A further advantage is that compared to pea only compositions, deeper cooling could be applied in the cooling die, which led to better settling of the fibrous structure and reducing the risk of gas cell formation.

Addition of calcium salt improved the products even more: firmer, sustained fibrous, stable processing, and options to further reduce the overall protein content and increase the fiber content, and still capable of incorporating even 60% of water.

### Example 2

### HME products with at least 60% water based on pea protein isolate and rapeseed protein isolate

High-moisture extruded material was produced on a twin-screw extruder ZSK 27 MV from Coperion GmbH. The extrusion barrel is divided in 10 sections each with their own temperature control. A total throughput (solid matter + water) of around 10 kg/hr was used, except sample 2 that ran at 12 kg/hr. The solids were dosed using a gravimetric solid feeder (K-tron) into the first barrel, at around 4 kg/hr, except # 7 and 9 which ran at 3.5 kg.hr. Water was fed with a gravimetric peristaltic pump (Watson Marlow) into the second barrel with a rate of around 6 kg/hr, except #2 at 8 kg/hr and # 7 and 9 at 6.5 kg/hr. The screw speed was set constant at 600 rpm. The temperature profile in all cases was that in barrels# 5-8 of the extrusion barrel the maximum temperature was obtained as indicated in the table, and thereafter it was cooled back to reach a temperature of 120°C at the last barrel #10. The temperature on the cooling die was set at 40°C (#1 and 2) and 55°C for all the others.

In table 3 below the compositions are given, all products further contained 2% NaCl (not indicated in the table. Sample 1 and 2 were soy-based references (soy protein concentrate, SPC), the other samples were made of pea protein isolate (PPI), pea fiber (PF) and rapeseed protein isolate (RPI) in various amounts. Also, variants with calcium carbonate (Ca) were made. The table also indicates the relative water level on total mass, at which the product was processed, the maximum temperature that was obtained in barrels # 5 and 6, and a fibrousness score given directly at the line, whether 'core flow' had occurred (Y = yes; M = medium, a little; N = no) and the pH of the material, value obtained by a Testo 205 pH meter, within one hour after production. After assessment at the line, the material was packed in plastic and part of the material was stored frozen, and the rest stored cool.

**Table 3**

| # | SP C (%) | PPI (%) | PF (%) | RPI (%) | Ca CO 3 (%) | Wa ter lev el [%] | Max Temp eratur e [°C] | Fibrousness score (1 bad - 5 good) | Core flow (Y/M/N) | pH | Ratio rapeseed: pea protein |
|---|---|---|---|---|---|---|---|---|---|---|---|
| 1 | 98 | | | | 0 | 60 | 160 | 5 | N | 6.1 | - |
| 2 | 98 | | | | 0 | 66 | 160 | 4 | M/N | 6.4 | - |
| 3 | | 88 | 10 | 0 | 0 | 60 | 130 | 2 | M | 6.8 | - |
| 4 | | 68 | 10 | 20 | 0 | 60 | 130 | 4 | N | 6.9 | 25:75 |
| 5 | | 68 | 10 | 20 | 0 | 60 | 150 | 5 | N | 6.9 | 25:75 |
| 6 | | 66 | 10 | 20 | 2 | 60 | 130 | 5 | N | 7.0 | 26:74 |
| 7 | | 66 | 10 | 20 | 2 | 65 | 130 | 3 | M/N | 7.0 | 26:74 |
| 8 | | 86 | 10 | 0 | 2 | 60 | 130 | 4 | M | 7.2 | - |
| 9 | | 86 | 10 | 0 | 2 | 65 | 130 | 2 | Y | 7.2 | - |
| 10 | | 56 | 20 | 20 | 2 | 60 | 130 | 4 | M | 6.9 | 29:71 |
| 11 | | 63 | 10 | 20 | 5 | 60 | 130 | 5 | N | 7.2 | 26:74 |
| 12 | | 78 | 10 | 10 | 0 | 60 | 130 | 4 | M | 7.1 | 13:87 |
| 13 | | 58 | 10 | 30 | 0 | 60 | 130 | 4 | M | 6.9 | 37:63 |

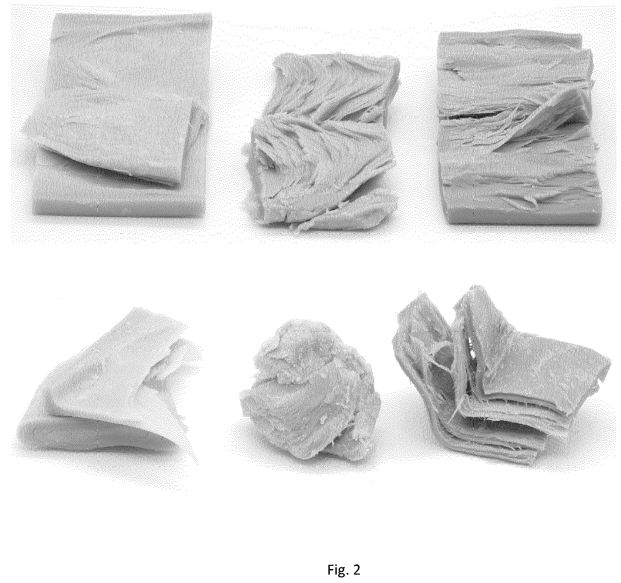

Brief description of the materials obtained: sample 1 was the soy-based reference, produced at 60% water resulted in firm, rubbery and fibrous material with elongated fibers in the flow direction, as shown in figure 2, top left. Upon kneading this material by hand, the firmness and fibrousness remained intact, as is seen in figure 2, the bottom picture left. The composition failed when - sample 2 - the water level was increased to 66%, giving rise to an unstable process even at higher throughput, and gave material with less fibrous character.

Sample 3 was a product based only on pea sources. The process was quite unstable, and the material often showed core flow. The course, crumbly and soft material showed some fibrousness, as is illustrated in figure 2 middle. The material could be kneaded into a dough ball, losing the fibrous character, as is shown in figure 2 bottom middle. The product tasted mealy and very 'pea-ish'. Increasing the water level was considered not feasible, at 60% water level the instability of the process was already too high.

Samples 4 and 5 were made with 20% rapeseed protein isolate replacing 20% pea protein isolate. When run at 60% water (sample 4), the material turned into a nice fibrous and medium-firm material with a nice meaty taste - low in pea off-notes, soft and juicy in the mouth. The fibrous character is clearly visible in figure 2, right. It also shows that, after kneading by hand, the fibrous character remained intact, see figure 2 bottom right. Increasing the temperature in barrels 5 - 8 to 150°C, also good product could be made, with a highly fibrous character, although sometimes the process showed some instability. It was a relatively soft material, but kneading kept the fibrous character intact.
In the next step, 2% CaCO₃ was added, replacing another 2% pea protein isolate. Sample 6 was produced at 60% water, sample 7 at 65%. Sample 6 was a very good product with an outspoken fibrous character, long fibers, with a chewy mouthfeel and bland taste. An increase in water level to 65% - sample 7 - led to a juicier material, a bit more crumbly and less chewy, and still fibrous.

Sample 8 was a pea-only composition with 2% CaCO₃. Compared to the product without CaCO₃ (sample 3) the product looked a little better but was rather inhomogeneous with a core that was tougher than the outside, not as good as sample 6 with 20% rapeseed isolate. Increasing the water level immediately led to a poor product with a high core flow and separating layers. Processed at 65%, sample 9 had some fibrous character but also showed strong core flow. This was less capable of holding more water than the products containing more rapeseed protein isolate.

In sample 10, the pea fiber content was increased to 20%, at the expense of pea protein isolate. The level rapeseed protein isolate was kept at 20%. The product was fibrous, not as outspoken as for instance sample 6 and 8 and showed some product instability and a little core flow.

Further increase of CaCO₃ to 5% and with 63% pea protein isolate - sample 11 - showed a good and fibrous material, nice texture with a good bite. Finally, two products were made with 10% rapeseed protein isolate (sample 12) and 30% rapeseed protein isolate (sample 13), both without CaCO₃. Both showed quite good fibrous texture, nearly as good as sample 5.

A selection of samples stored cool (not frozen) was analyzed using a texture analyser (TA-XT2, Stable Micro Systems, UK), and a knife-shaped probe (Muellenet-Owens Razor Shear Blade, Stable Micro Systems, UK), using these instrument settings: compression with a pre-test speed: 2 mm/s, a test speed: 1 mm/s, post-test speed: 10 mm/s and a strain of 50%, and a trigger force of 5 g. The penetration direction of the knife was perpendicular to the flow direction of the material out of the cooling die.

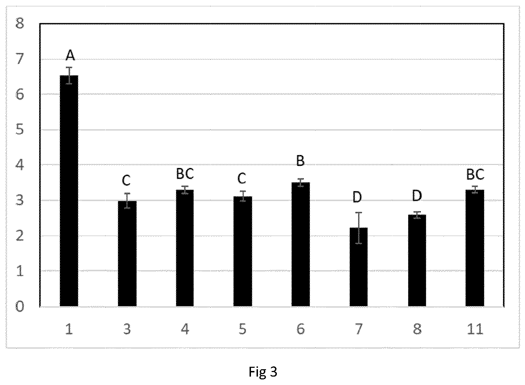

The results are presented in the table 4. A Tuckey pairwise comparison was executed to show the significance of the differences. The firmness values of the samples before freezing are also graphically represented in figure 3.

Some of the products were also measured after freezing and thawing. All products without rapeseed protein isolate became less firm after freezing, whereas in the presence of rapeseed protein isolate, the products stayed as hard or became harder. It is advantageous that the texture remains intact during freezing or more preferably increases in firmness.

**Table 4 *: fava bean product containing 48% water, see example 3**

| | Before freezing | | | After freezing | |
|---|---|---|---|---|---|
| sample # | Force [g] | SD [g] | Significanc e | Force [g] | SD [g] |
| 1 | 6,52 | 0,23 | A | 6,34 | 0,2 |
| 3 | 2,99 | 0,21 | C | 2,57 | 0,24 |
| 4 | 3,29 | 0,1 | BC | 3,84 | 0,18 |
| 5 | 3,12 | 0,14 | C | 3,22 | 0,06 |
| 6 | 3,5 | 0,11 | B | 3,63 | 0,15 |
| 7 | 2,22 | 0,44 | D | 2,83 | 0,22 |
| 8 | 2,59 | 0,09 | D | | |
| 14* | 6,28 | 0,31 | A | 5,56 | 0,34 |
| 11 | 3,3 | 0,08 | BC | | |

All these results confirmed that by adding RPI into a pea-based composition, the products became firmer, the fibrous character was more pronounced, and more water could be incorporated without loss of fibrous character. Also, the process was more stable as less core flow occurred when processing with RPI.

### Example 3

### HME products based on fava bean flour and rapeseed protein isolate

High-moisture extruded material based on fava bean flour (FBF) with or without rapeseed protein isolate was produced in a similar way at nearly the same settings as described in example 2, except that solids were fed with 5 kg/hr and water at 4.6 kg/hr (#14 and 15) or 4 kg/hr (#16). Details are given in table 5 below. All products contained 2% NaCl.

**Table 5**

| # | FBF (%) | RPI (%) | CaCO 3 (%) | Water level [%] | Max barrel Temper ature [°C] | Fibrousness score: 1 bad - 5 good | Core flow (Y/M/N) | pH | Ratio of rapeseed protein : fava bean protein |
|---|---|---|---|---|---|---|---|---|---|
| 14 | 78 | 20 | 0 | 48 | 140 | 3 | N | 6.2 | 28:72 |
| 15 | 76 | 20 | 2 | 48 | 140 | 2 | M/N | 6.5 | 28:72 |
| 16 | 98 | 0 | 0 | 45 | 140 | 1 | M/Y | 6,1 | - |

Sample 14, with 78% fava bean flour and 20% RPI, ran initially at higher water level, but this led to an unstable process, the base did not flow, and water was pushed back. When the water level was reduced to 48%, a fairly good texture could be achieved with a clear fibrous character.

Sample 15, as sample 14 but now with 2% CaCO₃ added, produced at 48% water a firm product, bit of expansion in the core, fibrous character not so outspoken.

In the absence of RPI, sample 16, further reduction of the water level to 45% was needed to obtain a stable process. This resulted in a product with a very dry mouthfeel, the center was dough like, no fibrousness was obtained, the product fell apart upon tearing.

These results show that RPI was needed to make a fava-bean based product with a fibrous character and an acceptable water level.

### Example 4

### HME products with oil and yeast extract

In the same manner as described in the previous examples, extruded products were made with pea sources and rapeseed protein isolate, including the effect of oil and a yeast extract (YE) (Maxavor Rye C).

**Table 6**

| # | PPI (%) | pea fiber (%) | RPI (%) | NaCl (%) | Oil (%) | YE (%) | % water | screw speed [rpm] | Fibrousne ss score | Core flow Y yes M medium N No |
|---|---|---|---|---|---|---|---|---|---|---|
| | | | | | | | | | 1=bad | |
| | | | | | | | | | 5=good | |
| 1 | 68 | 10 | 20 | 2 | 0 | 0 | 62 | 500 | 5 | n |
| 2 | 68 | 10 | 20 | 2 | 0 | 0 | 60 | 600 | 5 | n |
| 3 | 88 | 10 | 0 | 2 | 0 | 0 | 57 | 600 | 2 | y |
| 4 | 68 | 10 | 20 | 2 | 5 | 0 | 60 | 600 | 5 | n |
| 5 | 68 | 10 | 20 | 2 | 2 | 0 | 60 | 600 | 5 | n |
| 6 | 88 | 10 | 0 | 2 | 2 | 0 | 57 | 600 | 4 | n |
| 7 | 67 | 10 | 20 | 1 | 0 | 2 | 60 | 600 | 5 | n |

Sample 1 represents a composition from previous example (pea protein isolate DMPP80plus; pea fiber, Swelite; and rapeseed protein isolate) allowed even for 62 % water and still a fibrous product without core flow could be made.

Sample 2 and 3 show the effect of RPI with a different pea protein isolate - Nutralys F85M - as source, again showing that with RPI (sample 2) the water level at which could be produced was 60%, yielding a good fibrous texture. Upon kneading the fibrous structure remains. Whereas without RPI (#3) the maximum water level at which could be produced was 57 %, leading to poor product with low fibrousness and core flow, kneading into a mushy material. Moreover, for this, the temperature of the cooling die needed to be increased to 75°C, from 60°C, to be able to produce some material.

Samples 4, 5, and 6 were produced with sunflower oil added at extruder barrel # 9 (from the 10 in total, showing that same trend: the material with RPI can be processed with 5 (#4) or 2% (#5) oil and 60 % water feed and still maintain good properties - although a little softer than without oil. Without RPI, a lower maximum water level could only be used to obtain material that was moreover slightly less fibrous, and a higher die temperature was needed. After kneading all the products retained their fibrousness, (but not as good as without oil, bit flakier).

Sample 7 was made with a nearly similar composition as number 2, however now the salt level was reduced to 1% and 1% yeast extract Maxavor Rye C was added, resulting in a good and fibrous product comparable to sample 2. The taste of this product was slightly improved compared to sample 2, less salty and 'deeper', more savoury.

Firmness was measured using Texture Profile Analysis (TPA). Cylindrical samples with a diameter of 22 mm were cut out the slabs of extruded material. These were assessed by a TA-HD with a 25 kg load cell texture analyser (stable Micro Systems, UK) by a flat probe with a diameter of 50 mm, using this TPA profile: two consecutive compressions to 50%, pretest speed 5 mm/s, trigger force 1 g, test speed 1 mm/s, waiting time between first and second compression 2 seconds. The machine software calculated from the TPA profile several material characteristics, of which here only the hardness (force at 50% compression in the first cycle, in gram) and resilience (work (=surface) up curve first cycle / work down curve first cycle, in %) were used. A Tuckey pairwise comparison was executed to show the significance of the differences between the samples on these characteristics. The results are given in the table below.

**Table 7**

| | **Water level [%]** | **Hardness [g]** | **SD** | **Resilience [%]** | **SD** |
|---|---|---|---|---|---|
| 1 | 62 | nm | | | |
| 2 | 60 | 20157 | 410 | 30,6 | 0,2 |
| 3 | 57 | 22380 | 257 | 21,6 | 0,4 |
| 4 | 60 | 17952 | 359 | 29,7 | 0,3 |
| 5 | 60 | 18963 | 104 | 30,2 | 0,6 |
| 6 | 57 | 23744 | 462 | 24,4 | 0,4 |
| 7 | 60 | 19789 | 332 | 30,6 | 0,5 |

The results show that firmness was dominated by the water content (more water is lower firmness, compare sample 2 at 60% to number 3 at 57%, or number 5 at 60% and 6 with 57%). Addition of oil also reduced firmness somewhat as can be expected (compare number 2, no oil with number 4 (5% oil) and 5 (2% oil)). Strikingly, the resilience, as a measure of elasticity and resistance against deformation, was significantly higher in the case of product with rapeseed protein isolate as compared to a pea-only product, compare 2 with 3 and 4 and 5 with 6, despite the higher water level of the products with rapeseed protein isolate.

This example shows that rapeseed protein isolate improved the texture of high-moisture extrudates and allowed for a higher water inclusion levels and a more stable process.

Furthermore, it shows that oil and flavour could be incorporated without negative effect on processing and stability and improving the flavour.

### Example 5

Samples # 2 (pea protein isolate, pea fiber, rapeseed protein isolate, 60% water) and 3 (pea protein isolate, pea fiber, 57% water) described in example 4 were defrosted, cut to pieces by a Holac Cubixxx 120 cutting device, and refrozen. From visual inspection after second thawing, it showed that both samples still showed their fibrousness in the pieces, however Sample 3 showed more fines, and appeared flakier, those flakes may be more brittle. The material was marinated by adding marinade to an amount of cut material and manual tumbling until even distribution of the marinade, and allowed to infuse overnight, see composition of the marinade below.

**Table 8**

| | Gram | % |
|---|---|---|
| HME Extrudate, #2 and 3 | 150 | 71,09% |
| water | 40 | 18,96% |
| Rub (see below) | 16 | 7,58% |
| Maxavor Prime Beef (DSM Food Specialties) | 2 | 0,95% |
| Maxavor Plantmasker EU (DSM Food Specialties) | 1 | 0,47% |
| Native potato starch* | 2 | 0,95% |
| | 211 | |
| | | |

| *Breakdown of the Rub** | | % |
|---|---|---|
| Brown sugar | | 36.72 |
| Paprika pwd | | 21.28 |
| Salt | | 20.83 |
| Black pepper | | 5.88 |
| Onion pwd | | 3.96 |
| Garlic pwd | | 3.55 |
| Smoked paprika pwd | | 3.41 |
| Cayenne pepper | | 1.72 |
| Cumin pwd | | 1.54 |
| Coriander pwd | | 1.10 |
| ** sourced from local supermarket* | | |

Due to the large number of fines, the marinade was spread less homogeneously over the pieces of sample 3 than of sample 2. As a consequence, after shallow frying in oil (until core temperature of 80°C) sample 2 showed an inhomogeneous crust - appeared almost as if it was battered, whereas sample 3 was more homogeneous. The taste of the shallow-fried products showed that number 3 was drier had less bite and appeared lighter.

Without the marinade, the shallow-fried product number 2 was considered more juice, number 3 had more hints of cereal, green, and was drier.

*Conclusion:* the product with rapeseed protein isolate led to an overall better performance, in processing, frying and taste.

### Example 6

### HMEs based on different pea and rapeseed proteins

Material was made as described in the previous examples with pea protein concentrate (Vestkorn E1155X), pea protein isolate (DMPP80plus) and rapeseed protein isolate from various sources (next to the product used throughout this work, also Puratein HS was used, indicated by the asterisk in the table), in compositions and processed at water levels as indicated in the table below. All products contained 2% salt on dry matter. Set up was as follows: increase water level of each composition until product quality decreases too far, start with pea protein concentrate, then add rapeseed protein isolate first in 20% (recipe B), then in 34% (recipe C), then introduce pea protein isolate with rapeseed protein isolate next to pea concentrate (recipe D). In the end the product with a 20% rapeseed protein isolate of different sort was made (recipe E). The following days a repeat was made of the product with the original rapeseed protein isolate at 20% level and 55% water. Similar settings were used as before, screw speed at 750 rpm, max barrel temperature at 130°C and cooling die at 60°C, and process was reproducible.

**Table 9 * Puratein^{®} HS rapeseed protein isolate**

| # | Recipe | Pea protein concentrate (PPC) | Pea protein isolate (PPI) | Rapeseed protein isolate (RPI) | NaCl | % water | Fibrousness score | Core flow Y yes M medi N No |
|---|---|---|---|---|---|---|---|---|
| | | | | | | | 1=bad | |
| | | | | | | | 5=good | |
| 1 | A | 98 | 0 | 0 | 2 | 50 | 1 | M |
| 2 | B | 78 | 0 | 20 | 2 | 50 | 4 | M/N |
| 3 | B | 78 | 0 | 20 | 2 | 55 | 4 | M/N |
| 4 | B | 78 | 0 | 20 | 2 | 58 | 4 | M |
| 5 | B | 78 | 0 | 20 | 2 | 60 | 3 | M |
| 6 | C | 64 | 0 | 34 | 2 | 55 | 5 | N |
| 7 | C | 64 | 0 | 34 | 2 | 60 | 5 | N |
| 8 | D | 46 | 36 | 16 | 2 | 50 | 5 | N |
| 9 | D | 46 | 36 | 16 | 2 | 55 | 5 | N |
| 10 | D | 46 | 36 | 16 | 2 | 60 | 5 | N |
| 11 | D | 46 | 36 | 16 | 2 | 62 | 3 | N |
| 12 | E | 78 | 0 | 20* | 2 | 55 | 4 | M/N |
| 13 | E | 78 | 0 | 20* | 2 | 50 | 5 | M/N |

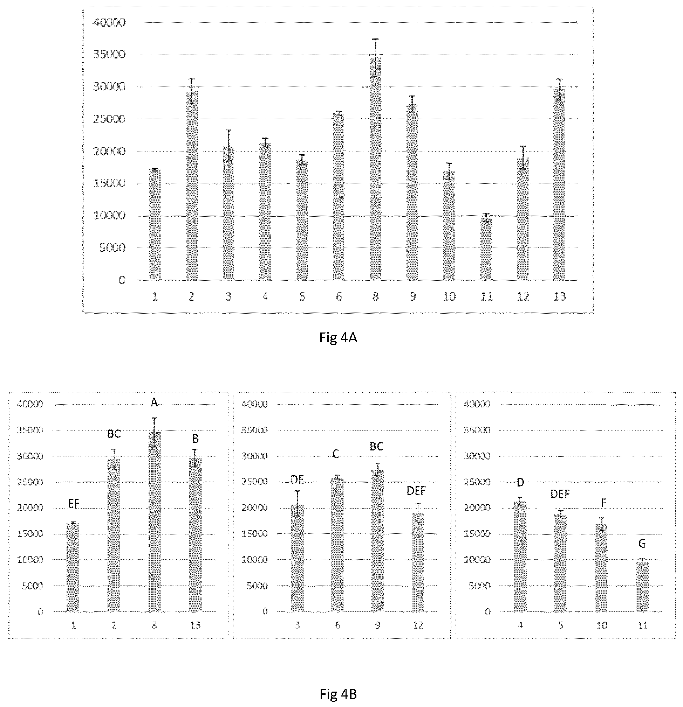

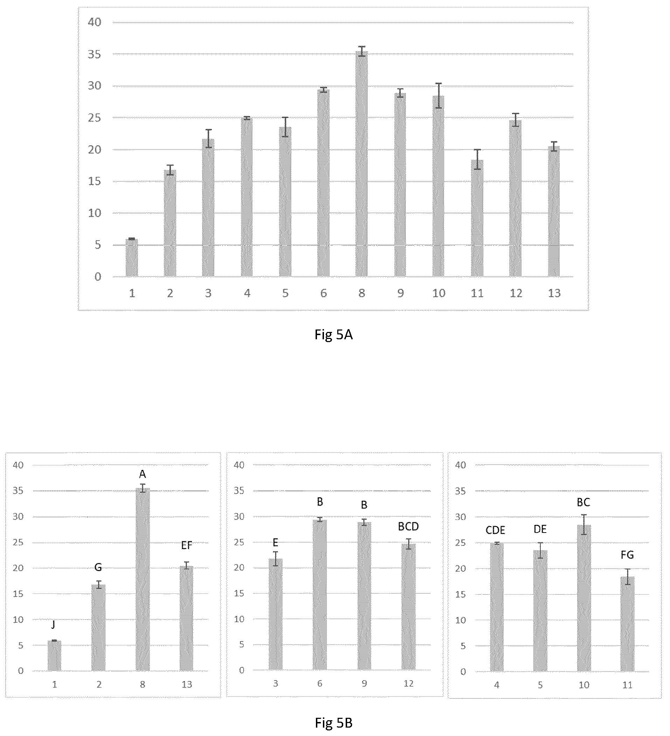

Texture Profile Analysis was performed on samples 1 to 13 using the method described in example 4. Values for firmness and resilience are listed in table 10. All samples were measured in fivefold, and a Tuckey pairwise comparison was executed to show the significance of the differences. Since the firmness values depend highly on water level, these are also indicated once more in this table. Additionally, the values are also represented in figures 4 and 5.

**Table 10**

| **Test ID** | **Water level [%]** | **Hardness [g]** | **SD** | **signif** | **Resilience [%]** | **SD** | **signif** |
|---|---|---|---|---|---|---|---|
| 1 | 50 | 17132 | 137 | EF | 6,0 | 0,1 | K |
| 2 | 50 | 29349 | 1913 | BC | 16,8 | 0,7 | G |
| 3 | 55 | 20867 | 2404 | DE | 21,7 | 1,4 | DE |
| 4 | 58 | 21300 | 696 | D | 24,9 | 0,2 | C |
| 5 | 60 | 18670 | 732 | DEF | 23,5 | 1,5 | CD |
| 6 | 55 | 25878 | 360 | C | 29,4 | 0,4 | B |
| 8 | 50 | 34565 | 2800 | A | 35,5 | 0,7 | A |
| 9 | 55 | 27369 | 1240 | BC | 28,9 | 0,6 | B |
| 10 | 60 | 16837 | 1238 | F | 28,5 | 1,9 | B |
| 11 | 62 | 9640 | 616 | G | 18,4 | 1,5 | FG |
| 12 | 55 | 18979 | 1792 | DEF | 24,6 | 1,0 | C |
| 13 | 50 | 29625 | 1624 | B | 20,5 | 0,7 | EF |

Based on product appearance, processability, taste and mouthfeel and texture profile analysis, the following can be said about the products:
- Sample 1 with only pea concentrate led to poor product. At 50% water a crumbly incoherent dough-like product was obtained, with a dry mouth feel and a highly pea-like taste. Higher water levels were not possible. It resulted in a very soft product with low level of resilience.
- Upon inclusion of 20% RPI improved material was obtained (samples 2, 3, 4, 5, 14, and 15). At 50 to 58% water level at processing, fairly fibrous products were obtained, with a little bit of process instability (core flow). The taste also improved, compared to sample 1 the pea-ish off notes were reduced. The product at 60% water (#5) was soft and fibrous character was less pronounced than at 55%, not fully stable process. The composition was run on 3 consecutive days and similar material was obtained (#3 vs #14 and #15). The product (#2) is nearly twice as firm as the product without rapeseed protein isolate (#1), and remarkably, resilience increases with increasing water level.
- With a PPC/RPI composition of 64/34 (2% salt), samples 6 and 7, a good, firm and fibrous product could be made even at 60% water, tasting tough savoury and nearly sweet. It is significantly firmer than with 20% rapeseed protein isolate as well as more resilient.
- A combination of PPC/PPI/RPI, 46/36/16 led to good products, samples 8 to 11, tasting neutral and bland. Sample 8, processed with 50% water, was the firmest and most resilient. Firmness decreased with increasing water level. Resilience was somewhat lower at higher water levels. At 60% water, the cooling die could be lowered further to arrest the fibrous structure better. Up to 62% water could be included, however from thereon the process became instable, and fibrousness got lost, firmness and resilience were significantly lower.
- At 20% RPI from different source, Puratein^{®} HS, samples 12 and 13, products were similar to the product with RPI used throughout the rest of this experiment, compare samples 2 and 3. These were slightly but not significantly softer than with the standard RPI, but significantly more resilient.

This example shows that rapeseed protein isolate improved the texture of high-moisture extrudates and allowed for a higher water inclusion levels and a more stable process, and was independent of the source of rapeseed protein isolate used here.

## Claims

1. A process for preparing a high-moisture extruded vegetable protein composition comprising:
(a) mixing rapeseed protein, a single legume-derived protein, and from 40-80 wt. % water in an extruder, wherein the ratio of rapeseed protein to legume-derived protein is from 5:95 to 40:60 and wherein the amount of protein is within the range of 50 to 75%, preferably 50 to 70% on dry weight of the mixture;
(b) heating the mixture obtained in step (a) in the extruder to a maximum temperature of 100-180°C; and
(c) extruding the mixture obtained in step (b) through a cooling die, to provide the high moisture extruded vegetable protein composition having a moisture content of 40-80 wt. %.

2. Process according to claim 1, wherein step (a) further comprises mixing a plant-based fiber, preferably in an amount of 5-40 wt. % on dry weight of the mixture.

3. Process according to anyone of claims 1 to 2, wherein the amount of rapeseed protein and single legume-derived protein is at least 80 wt. % of the protein in the mixture.

4. Process according to anyone of claims 1 to 3, wherein step (a) further comprises mixing a calcium-containing mineral, preferably, calcium carbonate, calcium chloride or calcium phosphate, preferably in an amount of 1 to 5 wt. % on dry weight of the mixture.

5. Process according to anyone of claims 1 to 4, wherein the single legume-derived protein is pea protein or fava bean protein.

6. Process according to anyone of claims 1 to 5, wherein the amount of water in step (a) is from 40-80 more preferably 55-75, more preferably 59-70 wt. %.

7. High-moisture extruded vegetable protein composition comprising rapeseed protein, a single legume-derived protein and from 40-80 wt. % water, wherein the ratio of rapeseed protein to legume-derived protein is from 5:95 to 40:60, comprising an amount of protein within the range of 50 to 75, preferably 50-70, wt. % on dry weight of the composition.

8. High-moisture extruded vegetable protein composition according to claim 7, further comprising a plant-based fiber, preferably in an amount of 5-40 wt. % on dry weight of the composition.

9. High-moisture extruded vegetable protein composition according to claim 7 or 8, wherein the amount of rapeseed protein and single legume-derived protein is at least 80 wt. % of the protein in the composition.

10. High-moisture extruded vegetable protein composition according to any of the claims 7 to 9, comprising an amount of protein within the range of 52 to 68 wt. % on dry weight of the composition.

11. High-moisture extruded vegetable protein composition according to any of the claims 7 to 10, further comprising a calcium-containing mineral, preferably, calcium carbonate, calcium chloride or calcium phosphate, preferably in an amount of 1 to 5 wt. % on dry weight of the composition.

12. High-moisture extruded vegetable protein composition according to any of the claims 7 to 11, wherein the single legume-derived protein is pea protein or fava bean protein.

13. Use of a high-moisture extruded vegetable protein composition according to any of the claims 7 to 12 in the preparation of a meat alternative.

14. Use according to claim 13 wherein said meat alternative is chosen from the group consisting chicken-style pieces, beef-style pieces, fish-style pieces, smokey pieces, shawarma-style pieces, bacon-style pieces, nuggets, crumbles, balls, jerky, fish-finger-like products, schnitzel-type products, products with a crispy coating, croquettes, HME-based pieces, HME based crumbles, chicken-style, beef-style or fish-style burgers or patties, sausages, 'meat' balls, preferably chicken-style, beef-style or fish-style jerkies, deli, like sliced ham-style alternative products and salads such as vegetable-based tuna-style or vegetable-based chicken-style salad or canned-fish alternatives, such as canned tuna alternative.

15. A meat alternative product comprising the composition according to any of the claims 7 to 12, preferably which meat alternative product is chosen from the group consisting of a chicken-style pieces, beef-style pieces, fish-style pieces, smokey pieces, shawarma-style pieces, bacon-style pieces, nuggets, crumbles, balls, jerky, fish-finger-like products, schnitzel-type products, products with a crispy coating, croquettes, HME-based pieces, HME based crumbles, chicken-style, beef-style or fish-style burgers or patties, sausages, 'meat' balls, preferably chicken-style, beef-style or fish-style jerkies, deli, like sliced ham-style alternative products and salads such as vegetable-based tuna-style or vegetable-based chicken-style salad, or canned-fish alternatives, such as canned tuna alternative.

## Patentansprüche

1. Verfahren zur Herstellung einer extrudierten Pflanzenproteinzusammensetzung mit hohem Feuchtigkeitkeitsgehalt, umfassend:
(a) Mischen von Rapsprotein, einem einzelnen Hülsenfrucht-abgeleiteten Protein und von 40-80 Gew. % Wasser in einem Extruder, wobei das Verhältnis von Rapsprotein zu Hülsenfrucht-abgeleitetem Protein von 5:95 bis 40:60 beträgt und wobei die Menge an Protein in dem Bereich von 50 bis 75 %, vorzugsweise 50 bis 70 %, bezogen auf das Trockengewicht des Gemischs liegt;
(b) Erhitzen des bei Schritt (a) erhaltenen Gemischs in dem Extruder auf eine Höchsttemperatur von 100-180 °C; und
(c) Extrudieren des bei Schritt (b) erhaltenen Gemischs durch eine Kühldüse, um die extrudierte Pflanzenproteinzusammensetzung mit hohem Feuchtigkeitkeitsgehalt mit einem Feuchtigkeitsgehalt von 40-80 Gew.-% bereitzustellen.

2. Verfahren nach Anspruch 1, wobei Schritt (a) ferner Beimischen einer Faser auf Pflanzenbasis, vorzugsweise in einer Menge von 5-40 Gew.-% bezogen auf das Trockengewicht des Gemischs, umfasst.

3. Verfahren nach einem der Ansprüche 1 bis 2, wobei die Menge an Rapsprotein und einzelnem Hülsenfrucht-abgeleitetem Protein wenigstens 80 Gew.-% des Proteins in dem Gemisch beträgt.

4. Verfahren nach einem der Ansprüche 1 bis 3, wobei Schritt (a) ferner Beimischen eines calciumhaltigen Minerals, vorzugsweise Calciumcarbonat, Calciumchlorid oder Calciumphosphat, vorzugsweise in einer Menge von 1 bis 5 Gew.-% bezogen auf das Trockengewicht des Gemischs, umfasst.

5. Verfahren nach einem der Ansprüche 1 bis 4, wobei das einzelne Hülsenfrucht-abgeleitete Protein Erbsenprotein oder Ackerbohnenprotein ist.

6. Verfahren nach einem der Ansprüche 1 bis 5, wobei die Menge an Wasser bei Schritt (a) von 40-80, bevorzugter 55-75, bevorzugter 59-70 Gew.-% beträgt.

7. Extrudierte Pflanzenproteinzusammensetzung mit hohem Feuchtigkeitkeitsgehalt, die Rapsprotein, ein einzelnes Hülsenfrucht-abgeleitetes Protein und von 40-80 Gew.-% enthält, wobei das Verhältnis von Rapsprotein zu Hülsenfrucht-abgeleitetem Protein 5:95 bis 40:60 beträgt, umfassend eine Menge an Protein in dem Bereich von 50 bis 75, vorzugsweise 50-70 Gew.-%, bezogen auf das Trockengewicht der Zusammensetzung.

8. Extrudierte Pflanzenproteinzusammensetzung mit hohem Feuchtigkeitkeitsgehalt nach Anspruch 7, ferner umfassend eine Faser auf Pflanzenbasis, vorzugsweise in einer Menge von 5-40 Gew.-% bezogen auf das Trockengewicht der Zusammensetzung.

9. Extrudierte Pflanzenproteinzusammensetzung mit hohem Feuchtigkeitkeitsgehalt nach Anspruch 7 oder 8, wobei die Menge an Rapsprotein und einzelnem Hülsenfrucht-abgeleitetem Protein wenigstens 80 Gew.-% des Proteins in der Zusammensetzung beträgt.

10. Extrudierte Pflanzenproteinzusammensetzung mit hohem Feuchtigkeitkeitsgehalt nach einem der Ansprüche 7 bis 9, umfassend eine Menge an Protein in dem Bereich von 52 bis 68 Gew. % bezogen auf das Trockengewicht der Zusammensetzung.

11. Extrudierte Pflanzenproteinzusammensetzung mit hohem Feuchtigkeitkeitsgehalt nach einem der Ansprüche 7 bis 10, ferner umfassend ein calciumhaltiges Mineral, vorzugsweise Calciumcarbonat, Calciumchlorid oder Calciumphosphat, vorzugsweise in einer Menge von 1 bis 5 Gew.-% bezogen auf das Trockengewicht der Zusammensetzung.

12. Extrudierte Pflanzenproteinzusammensetzung mit hohem Feuchtigkeitkeitsgehalt nach einem der Ansprüche 7 bis 11, wobei das einzelne Hülsenfrucht-abgeleitete Protein Erbsenprotein oder Ackerbohnenprotein ist.

13. Verwendung einer extrudierten Pflanzenproteinzusammensetzung mit hohem Feuchtigkeitkeitsgehalt nach einem der Ansprüche 7 bis 12 bei der Herstellung einer Fleischalternative.

14. Verwendung nach Anspruch 13, wobei die Fleischalternative ausgewählt ist aus der Gruppe bestehend aus hühnchenartigen Stücken, rindfleischartigen Stücken, fischartigen Stücken, rauchfleischartigen Stücken, Shawarma-artigen Stücken, schinkenartigen Stücken, Nuggets, Crumbles, Klößen, Trockenfleisch, fischstäbchenartigen Erzeugnissen, schnitzelartigen Erzeugnissen, Erzeugnissen mit knuspriger Hülle, Kroketten, Stücken auf HME-Basis, Crumbles auf HME-Basis, hühnchenartigen, rindfleischartigen oder fischartigen Burgern oder Patties, Würsten, "Fleischbällchen", vorzugsweise hühnchenartigem, rindfleischartigem oder fischartigem Trockenfleisch, Feinkost wie Alternativprodukte in der Art von geschnittenem Schinken, und Salate, wie z.B. thunfischartiger Salat auf Pflanzenbasis oder hühnchenartiger Salat auf Pflanzenbasis, oder Dosenfischalternativen, wie z.B. Dosenthunfischalternativen.

15. Fleischalternativprodukt umfassend die Zusammensetzung nach einem der Ansprüche 7 bis 12, wobei das Fleischalternativprodukt vorzugsweise ausgewählt ist aus der Gruppe bestehend aus hühnchenartigen Stücken, rindfleischartigen Stücken, fischartigen Stücken, rauchfleischartigen Stücken, Shawarma-artigen Stücken, schinkenartigen Stücken, Nuggets, Crumbles, Klößen, Trockenfleisch, fischstäbchenartigen Erzeugnissen, schnitzelartigen Erzeugnissen, Erzeugnissen mit knuspriger Hülle, Kroketten, Stücken auf HME-Basis, Crumbles auf HME-Basis, hühnchenartigen, rindfleischartigen oder fischartigen Burgern oder Patties, Würsten, "Fleischbällchen", vorzugsweise hühnchenartigem, rindfleischartigem oder fischartigem Trockenfleisch, Feinkost wie Alternativprodukte in der Art von geschnittenem Schinken, und Salate, wie z.B. thunfischartiger Salat auf Pflanzenbasis oder hühnchenartiger Salat auf Pflanzenbasis, oder Dosenfischalternativen, wie z.B. Dosenthunfischalternativen.

## Revendications

1. Procédé de préparation d'une composition de protéines végétales extrudées à haute teneur en humidité comprenant :
(a) mélanger des protéines de colza, des protéines issues d'une seule légumineuse, et de 40-80 % en poids d'eau dans une extrudeuse, dans lequel le rapport des protéines de colza sur les protéines issues d'une seule légumineuse est de 5:95 à 40:60 et dans lequel la quantité de protéines est comprise entre 50 et 75 %, de préférence entre 50 et 70 % du poids sec du mélange ;
(b) chauffer le mélange obtenu à l'étape (a) dans l'extrudeuse jusqu'à une température maximale de 100-180 °C ; et
(c) extruder le mélange obtenu à l'étape (b) à travers une filière de refroidissement, pour fournir la composition de protéines végétales extrudées à haute teneur en humidité ayant une teneur en humidité de 40-80 % en poids.

2. Procédé selon la revendication 1, dans lequel l'étape (a) comprend en outre le mélange d'une fibre d'origine végétale, de préférence en une quantité de 5-40 % en poids du poids sec du mélange.

3. Procédé selon l'une quelconque des revendications 1 à 2, dans lequel la quantité de protéines de colza et de protéines issues d'une seule légumineuse est d'au moins 80 % en poids des protéines dans le mélange.

4. Procédé selon l'une quelconque des revendications 1 à 3, dans lequel l'étape (a) comprend en outre le mélange d'un minéral contenant du calcium, de préférence du carbonate de calcium, du chlorure de calcium ou du phosphate de calcium, de préférence en une quantité de 1 à 5 % en poids du poids sec du mélange.

5. Procédé selon l'une quelconque des revendications 1 à 4, dans lequel les protéines issues d'une seule légumineuse sont des protéines de pois ou des protéines de fèves.

6. Procédé selon l'une quelconque des revendications 1 à 5, dans lequel la quantité d'eau dans l'étape (a) est de 40-80, plus préférablement 55-75, plus préférablement 59-70 % en poids.

7. Composition de protéines végétales extrudées à haute teneur en humidité comprenant des protéines de colza, des protéines issues d'une seule légumineuse et de 40-80 % en poids d'eau, dans laquelle le rapport des protéines de colza sur les protéines issues d'une seule légumineuse est de 5:95 à 40:60, comprenant une quantité de protéines allant de 50 à 75, de préférence de 50 et 70 % en poids du poids sec de la composition.

8. Composition de protéines végétales extrudées à haute teneur en humidité selon la revendication 7, comprenant en outre une fibre d'origine végétale, de préférence en une quantité de 5-40 % en poids du poids sec de la composition.

9. Composition de protéines végétales extrudées à haute teneur en humidité selon la revendication 7 ou 8, dans laquelle la quantité de protéines de colza et de protéines issues d'une seule légumineuse est d'au moins 80 % en poids des protéines dans la composition.

10. Composition de protéines végétales extrudées à haute teneur en humidité selon l'une quelconque des revendications 7 à 9, comprenant une quantité de protéines dans la plage de 52 à 68 % en poids du poids sec de la composition.

11. Composition de protéines végétales extrudées à haute teneur en humidité selon l'une quelconque des revendications 7 à 10, comprenant en outre un minéral contenant du calcium, de préférence du carbonate de calcium, du chlorure de calcium ou du phosphate de calcium, de préférence en une quantité de 1 à 5 % en poids du poids sec de la composition.

12. Composition de protéines végétales extrudées à haute teneur en humidité selon l'une quelconque des revendications 7 à 11, dans laquelle les protéines issues d'une seule légumineuse sont des protéines de pois ou des protéines de fèves.

13. Utilisation d'une composition de protéines végétales extrudées à haute teneur en humidité selon l'une quelconque des revendications 7 à 12 dans la préparation d'un substitut de viande.

14. Utilisation selon la revendication 13, dans laquelle ledit substitut de viande est choisi dans le groupe constitué par des morceaux de style poulet, des morceaux de style bœuf, des morceaux de style poisson, des morceaux fumés, des morceaux de style shawarma, des morceaux de style bacon, des nuggets, des crumbles, des boules, de la viande séchée, des produits de type bâtonnets de poisson, des produits de type schnitzel, des produits avec un enrobage croustillant, des croquettes, des morceaux à base de HME, des crumbles à base de HME, des hamburgers ou des galettes de poulet, de bœuf ou de poisson, des saucisses, des boulettes de « viande », de préférence des jerkies de poulet, de bœuf ou de poisson, de la charcuterie, comme des produits alternatifs de type jambon tranché et des salades telles que des salades de thon à base de légumes ou de poulet à base de légumes ou des alternatives de poisson en conserve, comme des alternatives de thon en conserve.

15. Produit de substitut de viande comprenant la composition selon l'une quelconque des revendications 7 à 12, lequel produit de substitut de viande est de préférence choisi dans le groupe constitué par des morceaux de style poulet, des morceaux de style bœuf, des morceaux de style poisson, des morceaux fumés, des morceaux de style shawarma, des morceaux de style bacon, des nuggets, des crumbles, des boules, de la viande séchée, des produits de type bâtonnets de poisson, des produits de type schnitzel, des produits avec un enrobage croustillant, des croquettes, des morceaux à base de HME, des crumbles à base de HME, des hamburgers ou des galettes de poulet, de bœuf ou de poisson, des saucisses, des boulettes de « viande », de préférence des jerkies de poulet, de bœuf ou de poisson, de la charcuterie, comme des produits alternatifs de type jambon tranché et des salades telles que des salades de thon à base de légumes ou de poulet à base de légumes ou des alternatives de poisson en conserve, comme des alternatives de thon en conserve.
